# EUROPÄISCHE PATENTSCHRIFT

(11) **EP 1 759 801 B1**
(45) Veröffentlichungstag und Bekanntmachung des Hinweises auf die Patenterteilung: **25.08.2010**
(21) Anmeldenummer: 06026457.9
(22) Anmeldetag: 26.05.2003
(51) Int. Cl.: B23K 11/30

(54) **Punktschweisswerkzeug**
Spot welding tool
Outil de soudage par points

(30) Priorität: 03.07.2002 AT 9962002
(43) Veröffentlichungstag der Anmeldung: 07.03.2007
(62) Teilanmeldung aus: 03735133.5
(73) Patentinhaber: Fronius International GmbH, 4643 Pettenbach (AT)
(72) Erfinder: Stieglbauer, Walter, 4901 Manning (AT); Wimmer, Manfred, 4600 Wels (AT); Himmelbauer, Karin, 4493 Wolfern (AT)
(74) Vertreter: Heger, Georg

(56) Entgegenhaltungen:
- CH-A- 466 451
- DE-A- 1 565 782
- US-A- 5 973 287
- PATENT ABSTRACTS OF JAPAN Bd. 1998, Nr. 06, 30. April 1998 (1998-04-30) -& JP 10 029071 A (FURUKAWA ELECTRIC CO LTD:THE), 3. Februar 1998 (1998-02-03)
- PATENT ABSTRACTS OF JAPAN Bd. 1996, Nr. 09, 30. September 1996 (1996-09-30) -& JP 08 118037 A (FURUKAWA ELECTRIC CO LTD:THE), 14. Mai 1996 (1996-05-14)

## Beschreibung

Die Erfindung betrifft ein Punktschweißwerkzeug zum Widerstandsschweißen von Werkstücken, insbesondere Blechen, mit zumindest einer Elektrode und einer Wickelvorrichtung zum Auf- und Abwickeln eines Bandes zum Schutz der zumindest einen Elektrode.

Ein solches Punktschweißwerkzeug is aus der JP 08 118 037 bekannt.

Derzeit werden beispielsweise im Karosseriebau vermehrt Bleche oder andere Werkstücke aus Aluminiumlegierungen und Magnesium, sowie verzinkte bzw. beschichtete Stahlbleche - teilweise in hochfester Ausführung - eingesetzt. Neben Vorteilen wie Gewichtsersparnis und guter Korrosionsbeständigkeit verursachen diese Materialien bzw. deren Beschichtungen, Probleme beim Fügen durch Punktschweißen. In erster Linie wirkt sich die gegenüber blankem Stahlblech stark verringerte Standmenge der verwendeten Punktschweißelektroden nachteilig aus. Der hohe Verschleiß der Elektroden verursacht hohe Kosten durch häufiges Nachbearbeiten der Elektrodenkontaktfläche bzw. durch die daraus resultierenden häufigen Elektrodenwechsel sowie eine verminderte Schweißqualität insbesondere vor einer Nachbearbeitung der Elektroden oder vor einem Elektrodenwechsel.

Zum Schutz der Punktschweißelektroden vor Verschmutzung bzw. einer Auflegierung der Elektrode durch den zu verschweißenden Werkstoff ist es bekannt, zwischen der Elektrode und dem Werkstück eine Metallfolie in Form eines Bandes beizulegen. Um einen gesicherten Bandvorschub zu erlangen, ist es notwendig, ein Festkleben des Bandes an der Kontaktfläche der Elektrode zu verhindern.

Hierzu ist aus der EP 0 830 915 B1 eine Vorrichtung zum Schutz der Elektroden beim Punktschweißen bekannt, bei der ein Band mit Hilfe einer Abwickelvorrichtung über die zu schützende Elektrode gezogen wird. Das Band besteht im Wesentlichen aus einer Kupfer-Nickellegierung oder aus reinem Nickel, mit einer Dicke von 0,02 mm bis 0,05 mm. Für eine längere Standfestigkeit ist die Elektrode, insbesondere die Elektrodenkappe mit Silber oder einem Silbermetalloxid beschichtet oder mit einem entsprechenden Einsatz versehen.

Weiters ist aus der US 5 552 573 A ein Band für ein Widerstandsschweißverfahren zum Schutz der Elektrode bekannt, bei dem das Band aus einem Grundmaterial besteht, auf dem beidseitig jeweils eine Schicht aufgetragen ist, wobei die Schichten aus dem gleichen oder einem unterschiedlichen Material bestehen können. Das Grundmaterial weist dabei eine Dicke von 0,02 mm bis 1 mm auf und besteht aus Eisen, Stahl, Kupfer oder einer Kupferlegierung. Die aufgetragenen Schichten weisen eine Dicke im Bereich von 1 µm bis 100 µm auf und können aus Nickel, Titan, Niob, Molybdän, Wolfram, Chrom, Kobalt oder Legierungen daraus, bestehen. Nachteilig ist bei derartigen Bändern, dass ein sehr hoher Herstellungsaufwand durch Beschichten oder Legieren notwendig ist und somit sehr hohe Kosten bei der Herstellung derartiger Bänder entstehen. Ein weiterer sehr wesentlicher Nachteil besteht darin, dass eine Vielzahl von Kombinationen der unterschiedlichsten Materialien möglich sind, so dass für die unterschiedlichen Anwendungen eine aufwendige und kostspielige Lagerung derartiger Kombinationsbänder notwendig ist, da der Benutzer keinerlei Möglichkeiten hat, sich selbstständig die unterschiedlichen Kombinationen zusammen zu stellen.

Eine Anwendung von Bändern zum Schutz der Elektroden beim Punktschweißverfahren sind weiters aus der DE 197 54 546 C1, der JP 10 029 071 A, der JP 08 118 037 A, JP 04 322 886 A oder der JP 05 192 774 A bekannt. Dabei wird bei den Punktschweißwerkzeugen das Band, welches über eine Wickelvorrichtung zu- und abgeführt wird, über die Elektrode als Schutz vor der Berührung der Elektrode mit dem Werkstück bzw. Bauteil positioniert, so dass bei einem Punktschweißprozess das Band am Werkstück bzw. Bauteil zum Anliegen kommt.

Die JP 06-344149 A zeigt ebenfalls ein Schutzband für die Elektroden beim Widerstandsschweißen von Werkstücken, welches aus Kupfer oder dgl. mit einer Kupfer-Zinn-Legierungsbeschichtung besteht. Somit muss das Schutzband mit einer entsprechenden Beschichtung vorgefertigt werden.

Nachteilig ist bei den Verfahren gemäß der DE 197 54 546 C1 und der JP 04 322 886 A, dass das Band bei der Förderung über die Elektrode gezogen wird und somit aufgrund der Reibung zwischen der Elektrode und dem Band ein hoher Elektrodenverschleiß zustande kommt.

Bei den Verfahren gemäß der JP 10 029 071 A und der JP 08 118 037 A ist nachteilig, dass für die Bandförderung, insbesondere die Zu- und Abführung des Bandes, ein sehr komplexer Aufbau notwendig ist, so dass derartige Punktschweißwerkzeuge in der Praxis kaum einsetzbar sind. Mit derartigen Anlagen ist es nur möglich, einfache Bleche miteinander zu verschweißen. Eine Anwendung bei Punktschweißrobotern, insbesondere in der Autoindustrie, hingegen ist nicht möglich, da hierzu kleine kompakte Punktschweißwerkzeuge benötigt werden.

Der Erfindung liegt die Aufgabe zu Grunde ein Punktschweißwerkzeug der eingehend definierten Art mit geringer Baugröße zu schaffen.

Die Aufgabe der Erfindung wird durch ein Punktschweißwerkzeug nach Anspruch 1gelöst. Durch die Anordnung des Druckelements wird ein zusätzlicher Druck auf die Werkstücke, insbesondere Bleche, ausgeübt, so dass nicht nur eine punktuelle Druckbeaufschlagung auf das Werkstück über die Elektrode erfolgt und somit ein Aufwölben des Werkstückes verhindert werden kann. Zusätzlich wird dadurch die Elektrode geschont und der Verschleiß der Elektrode vermindert. Dadurch dass das Druckelement eine Führung für das Elektrodenschutzband aufweist und in Längsrichtung der Elektrode beweglich mit dieser verbunden ist, ist das Band von der Elektrode distanzierbar. Durch das Abheben des Elektrodenschutzbandes von der Elektrode schleift dieses bei einer Weiterbewegung des Bandes nicht mehr an der Elektrode, und hilft somit mit, den Verschleiß der Elektrode zu reduzieren. Dadurch wird es möglich, auf kostspielige Beschichtungen an der Elektrode und auch am Elektrodenschutzband zu verzichten. Somit wird ein sehr kompaktes Punktschweißwerkzeug geschaffen, das auch bei Schweißrobotern aber auch bei handbedienten Schweißzangen Anwendung finden kann. Die Zugänglichkeit derartiger Punktschweißgeräte mit Bändern entspricht der Zugänglichkeit von Punktschweißwerkzeugen ohne Bändern. Die Führungskanäle zur Aufnahme des Bandes schaffen eine optimale Bandführung entlang des Punktschweißwerkzeuges, wodurch die Baugröße des Punktschweißwerkzeuges mit der Zuführung und Abführung des Bandes sehr klein gehalten werden.

Von Vorteil ist es, wenn das Druckelement im entlasteten Zustand, d.h. bei geöffneter Schweißzange, die Elektrode überragt. Dadurch wird immer gewährleistet, dass das Band zum Schutz der Elektrode während des Transportes nicht an der Elektrode anliegt.

Vorteilhafterweise sind Mittel zur Kraftaufbringung des Druckelements vorgesehen, so dass das Druckelement im Betrieb des Punktschweißwerkzeuges einen Druck bzw. eine Kraft auf die Werkstücke, insbesondere die Bleche, ausübt. Somit erfolgt keine punktuelle Krafteinwirkung über die Elektrode, sondern eine Krafteinwirkung an mehreren Punkten bzw. Flächen, wodurch ein Verwinden oder Aufwölben der Werkstücke vermieden wird. Somit wird ein formschlüssiges Aneinanderliegen der Werkstücke, insbesondere der Bleche, während des Schweißvorganges erreicht.

Die Mittel zur Kraftaufbringung können durch ein elastisches Element, beispielsweise eine Feder, oder Verstellmittel gebildet sein.

Weiters können Mittel zur Einstellung der Kraft auf das Druckelement vorgesehen sein, um das Punktschweißwerkzeug an die jeweiligen Anforderungen optimal anpassen zu können.

Wenn die Führung für das Band im Druckelement so gestaltet ist, dass das Band zum Schutz der Elektroden über eine Stirnfläche des Druckelements ragt, wird gewährleistet, dass beim Anpressen an die Werkstücke nur das Band am Werkstück zur Auflage kommt und somit ein Festkleben am Werkstück verhindert wird, da das Material des am Werkstück anliegenden Metallbandes auf dieses abgestimmt wird.

Das Druckelement kann gemäß einem weiteren Merkmal der Erfindung in Form eines Metallringes ausgebildet sein, welcher vorteilhafterweise geringere elektrische Leitfähigkeit als die Elektrode aufweist oder isoliert angeordnet ist, so dass der zur Schweißung notwendige elektrische Strom nicht über das Druckelement fließt.

Um den Schweißvorgang optimal steuern zu können, kann das Druckelement als Sensor für die Erfassung der Berührung des Punktschweißwerkzeuges mit dem Werkstück, insbesondere Blech, ausgebildet sein. Dabei kann der Sensor elektronisch oder mechanisch ausgebildet sein.

Die Erfindung wird anschließend durch Ausführungsbeispiele näher beschrieben.

Es zeigen:
Fig. 1 eine Ansicht auf eine Einrichtung zum Schutz von Elektroden in vereinfachter, schematischer Darstellung;
Fig. 2 einen Schnitt durch die Schutzeinrichtung gemäß Fig. 1 entlang den Schnittlinien II-II;
Fig. 3 eine schematische Seitenansicht einer Ausführungsform eines Punktschweißwerkzeuges;
Fig. 4 einen Schnitt durch eine Ausführungsform eines Punktschweißwerkzeuges in vereinfachter, schematischer Darstellung; und
Fig. 5 eine Ansicht auf das Punktschweißwerkzeug gemäß Fig. 4 von Seiten des Werkstückes.

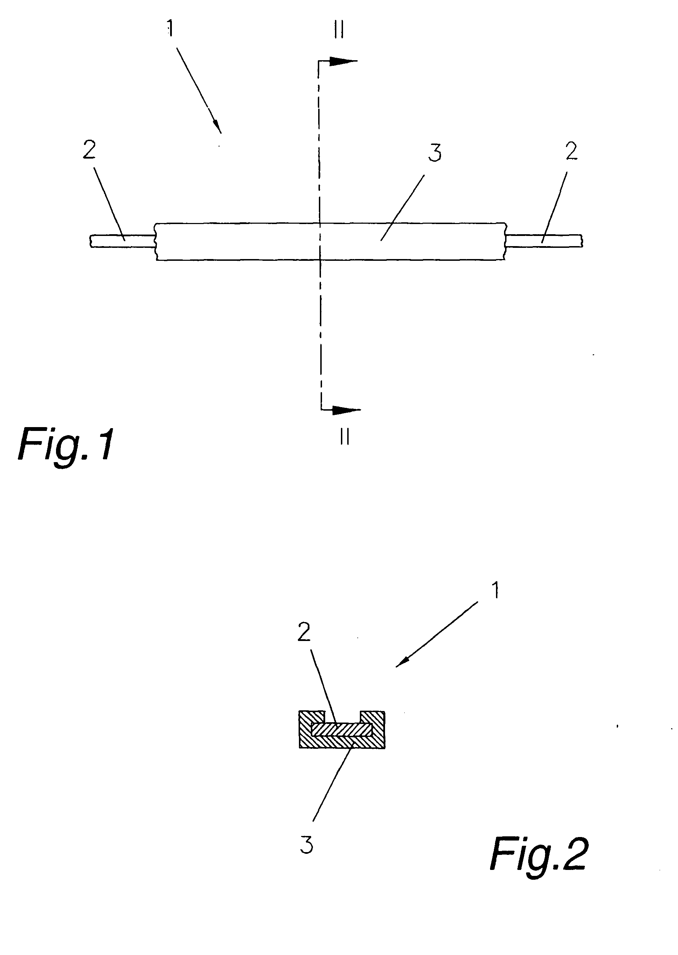

In den Fig. 1 und 2 ist ein Band 1 zum Schutz von Elektroden beim Widerstandsschweißen gezeigt.

Die verwendete Einrichtung zum Schutz der Elektroden umfasst ein Band 1, das aus mindestens zwei übereinander angeordneten Metallbändern 2, 3 aus verschiedenen Materialien. Die Metallbänder 2, 3 sind bevorzugt ausschließlich formschlüssig verbunden, ohne dass ein Stoffschluss stattfindet. Die Verbindung der Metallbänder 2, 3 kann durch Falzen, Kleben, Stanzen oder Schweißen erfolgen. Im dargestellten Ausführungsbeispiel ist ein mit Falzen verbundenes Band 1 gezeigt. Wesentlich ist, dass die Metallbänder 2, 3 für das Widerstandsschweißen in einfacher Form übereinander angeordnet sind, da hierdurch eine Abstimmung an die benachbarten Materialen des Werkstückes und der Elektrode ermöglicht wird. Selbstverständlich ist es auch möglich, dass die Metallbänder 2, 3 gegeneinander verschiebbar sind, wobei die Metallbänder 2, 3 nach einem Widerstandsschweißprozess mit unterschiedlicher Geschwindigkeit verschiebbar sind.

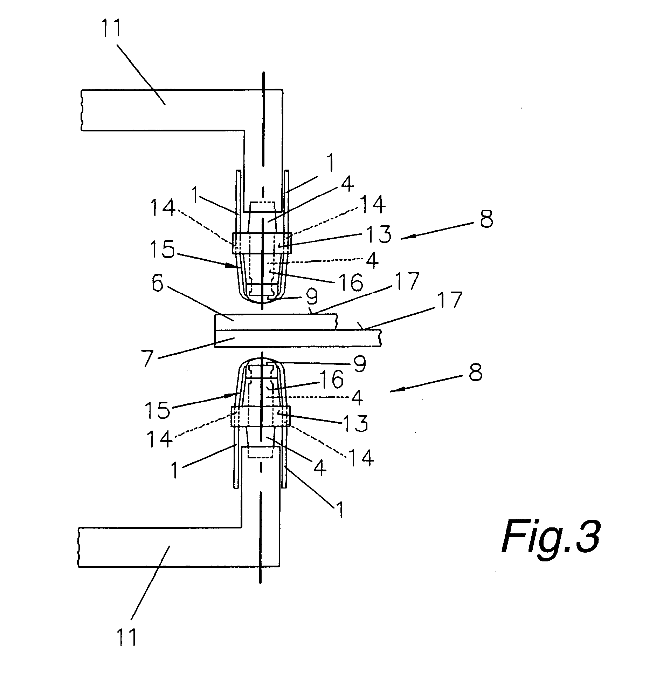

Derartige Bänder 1 zum Schutz von Elektroden 4 werden in der Praxis zwischen der Elektrode 4, insbesondere einer Elektrodenkappe 5, sowie der Oberfläche des zu verschweißenden Werkstückes, insbesondere Bleches 6, 7, und relativ zur Elektrode 4 verschiebbar angeordnet, wie dies schematisch in Fig. 3 dargestellt ist. Um die Bandführung und das Handhaben des Bandes 1 zu vereinfachen, ist es zweckmäßig, die Metallbänder 2, 3 miteinander zu verbinden. Dazu stehen prinzipiell mehrere Möglichkeiten, wie bereits erwähnt, zur Verfügung. Die unter technischen und wirtschaftlichen Aspekten am besten geeignete Variante, ist eine mechanische Verbindung der Metallbänder 2, 3, z.B. durch Falzen. Hierbei wird vorzugsweise das weichere der zumindest zwei Materialien um die seitlichen Ränder des härteren Metallbandes 2 gefalzt, wie dies in Fig. 2 ersichtlich ist. Durch eine nicht stoffschlüssige Verbindung der Metallbänder 2, 3 wird vermieden, dass sich das Elektrodenschutzband trotz der unterschiedlichen Ausdehnungskoeffizienten der unterschiedlichen Materialien nicht ungewollt verformt, und im weiteren Sinne dadurch Probleme bei der Bandführung auftreten. Je nach Anwendungsfall der Erfindung und der zu verschweißenden Materialien bzw. eingesetzten Materialien der Metallbänder 2, 3 ist es möglich, mehrere Schweißpunkte auf ein und den selben Bandabschnitt des Bandes 1 zu setzen, bevor es notwendig wird, dieses weiterzubewegen.

Durch dieses Band 1 ist es möglich, dass das der Elektrode 4 zugewandte Metallband 2 auf das Elektrodenmaterial abgestimmt wird, sowie das dem Werkstück, insbesondere Blech 6 oder 7, zugewandte Metallband 3 auf das Material des zu verschweißenden Werkstückes, insbesondere der Bleche 6, 7, abgestimmt wird. Dadurch kann die Schweißqualität bei geringem Kostenaufwand wesentlich verbessert werden und/oder die Standzeit der Elektroden 4 wesentlich erhöht werden. Somit kann beispielsweise das der Elektrode 4 zugewandte Metallband 2 aus einem Material mit geringer Klebeneigung zum Material der Elektrode 4 sowie das dem Werkstück, insbesondere Blech 6, 7, zugewandte Metallband 3 aus einem Material mit geringer Klebeneigung zu dem zu verschweißenden Werkstück bestehen. Bevorzugt besteht das der Elektrode 4 zugewandte Metallband 2 aus einem Material aus der Gruppe der Eisenmetalle, oder einer Legierung mit dem Hauptbestandteil aus der Gruppe der Eisenmetalle, sowie das dem zu verschweißenden Werkstück, insbesondere Blech 6, 7, zugewandte Metallband 3 aus Kupfer oder einer Kupferlegierung.

Dabei hat es sich beim Einsatz einer standardmäßigen Elektrode 4 aus Kupfer bzw. einer Kupferlegierung und einem beschichteten hochfesten Stahlblech als vorteilhaft erwiesen, dass auf der der Elektrode 4 zugewandten Seite, z.B. Stahlblech, verwendet wird. Die Dicke des Metallbandes 2 sollte bevorzugt zwischen 0,05 mm und 0,15 mm betragen. Durch die hohe Festigkeit des Metallbandes 2 aus Stahlblech wird ein zuverlässiger Transport gewährleistet. Das dem zu verschweißenden Werkstück, insbesondere Blech 6, 7, zugewandte Metallband 3 kann z.B. aus reinem Kupfer bestehen. Die Dicke des Metallbandes 3 ist abhängig vom Material und der Materialstärke des zu verschweißenden Werkstückes, insbesondere Bleches 6, 7, bzw. von den Schweißparametern, wie beispielsweise der Stromhöhe oder der Wärmeeinbringung, und sollte bevorzugt zwischen 0,1 mm und 0,5 mm betragen. Beim Widerstandsschweißen von Werkstücken, insbesondere Blechen 6, 7, mit Beschichtungen, wie beispielsweise bei speziellen Werkstücken mit Zinkschichten mit oder ohne anorganischen Stoffen, besteht eine Neigung von Kupfer mit der Beschichtung eine chemische Verbindung einzugehen. Somit ist der Einsatz eines Metallbandes 3 aus Kupfer für derartige Bleche sehr vorteilhaft, da dadurch ein sauberes und spritzerfreies Widerstandsschweißen gewährleistet wird.

Der wesentlichste Vorteil bei einem derartigen Widerstandsschweißprozess mit einem Band 1 zum Schutz der Elektrode 4 liegt darin, dass das Band 1 an die verschiedensten Parameter, die für den Widerstandsschweißprozess wesentlich sind, angepasst werden kann. Hierbei sind die Materialien der übereinanderliegenden Metallbänder 2, 3 so aufeinander abgestimmt, dass beispielsweise ein gewünschter Wärmeeintrag erzielbar ist, wodurch auf die Schweißqualität Einfluss genommen werden kann. Weiters ist es möglich, dass das Band 1, insbesondere das der Elektrode 4 zugewandte Metallband 2, eine Schmelztemperatur höher 1000°C oder Leitfähigkeit höher 1 m/(Ω*mm²) aufweist, so dass ein Klebenbleiben des Bandes 1 an der Elektrode 4 verhindert wird. Durch entsprechende Variationen der beiden Metallbänder 2, 3 in Material und Dicke lässt sich der Wärmehaushalt des Schweißprozesses sehr wesentlich beeinflussen und verbessern.

Ein besonderer Vorteil eines derartigen Bandes 1 liegt vor allem auch darin, dass durch eine nicht stoffschlüssige Verbindung der Metallbänder 2, 3, also durch Verwendung zweier unabhängiger Metallbänder 2, 3, der Benutzer selbstständig derartige Bänder 1 herstellen kann und somit die für seinen Schweißprozess optimale Materialkombinationen schaffen kann.

In den Fig. 3 bis 5 ist ein Punktschweißwerkzeug 8 zum Widerstandsschweißen von Blechen 6, 7 oder Bauteilen gezeigt. Bevorzugt wird das Punktschweißwerkzeug 8 mit einer Wickelvorrichtung (nicht dargestellt) zum Auf- und Abwickeln von einem an einer Elektrode 4 quer anliegenden Band 1 eingesetzt, wobei bevorzugt ein Band 1, wie in den Fig. 1 und 2 beschrieben zum Einsatz kommt. Es ist jedoch auch möglich, dass bei dem erfindungsgemäßen Punktschweißwerkzeug 8 nur ein einteiliges Band 1 mit oder ohne einer auflegierten Schicht, wie aus dem Stand der Technik bekannt, eingesetzt werden kann.

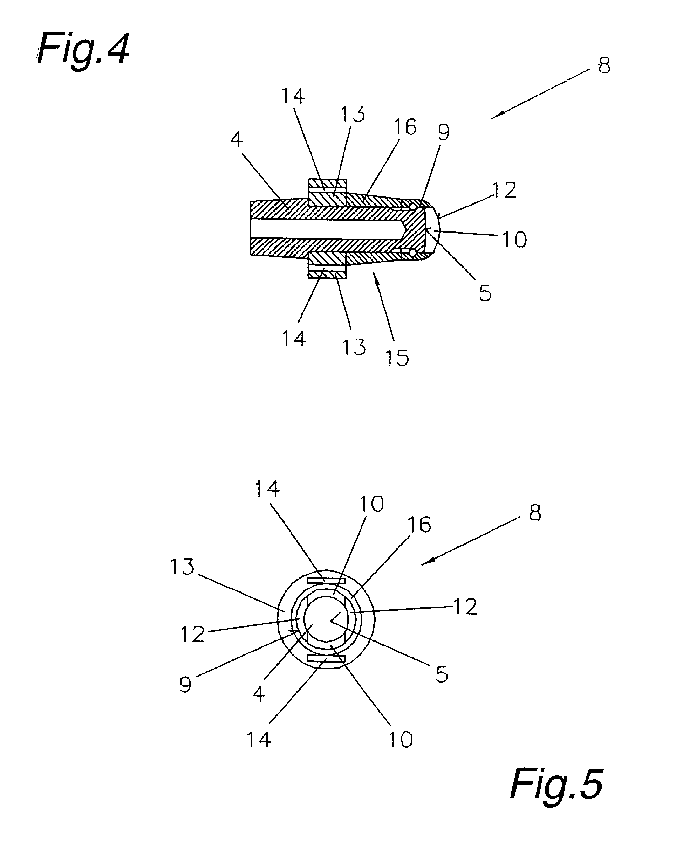

Um die Elektrode 4 ist im Bereich einer Elektrodenkappe 5 bzw. einer Kontaktfläche der Elektrode 4 mit dem Werkstück, insbesondere Blech 6, 7, ein Druckelement 9 angeordnet. Das Druckelement 9 ist beweglich an der Elektrode 4 angeordnet und beaufschlagt das Werkstück mit zusätzlichem Druck. Wird das Punktschweißwerkzeug 8 mit dem Band 1 eingesetzt, so weist das Druckelement 9 bevorzugterweise eine Führung 10, insbesondere an der Stirnfläche, für das Band 1 auf, wobei das Druckelement 9 zum Abheben des Bandes 1 von der Elektrode 4 ausgebildet ist, so dass das Druckelement 9 während oder nach dem Öffnen einer Schweißzange 11, wie schematisch in Fig. 4 angedeutet, oder einer funktionsähnlichen Apparatur das Band 1 von der Elektrodenoberfläche bzw. der Elektrodenkappe 5 abhebt. Die Führung 10 im Druckelement 9 ist derart ausgebildet, dass das Band 1 mit einer Stirnfläche 12 des Druckelements 9 ebenflächig abschließt. Selbstverständlich ist es auch möglich, dass die Führung für das Band 1 im Druckelement 9 derart ausgebildet ist, dass das Band 1 über die Stirnfläche 12 des Druckelements 9 ragt.

Bei dem dargestellten Ausführungsbeispiel besteht das Punktschweißwerkzeug 8 aus einem ringförmigen Aufbau, wobei das Druckelement 9 aus einem Metallring mit geringerer elektrischer Leitfähigkeit als jene der Elektrode 4 besteht. Das Druckelement 9 ist axial an der zylindrischen Elektrode 4 verschiebbar angeordnet. Im entlasteten Zustand, d.h. bei geöffneter Schweißzange 11 überragt das Druckelement 9 die Elektrode 4. Weiters kann an der Elektrode 4 ein Stützelement 13 angeordnet sein, wobei dieses Führungskanäle 14 zur Aufnahme des Bandes 1 aufweist. Zwischen dem Stützelement 13 und dem Druckelement 9 kann ein Mittel 15 zur Aufbringung einer Kraft auf das Druckelement, insbesondere ein Federelement, angeordnet sein, wodurch das Druckelement 9 mit entsprechendem Druck beaufschlagt und entlang der Elektrode 4 verschoben werden kann.

Im dargestellten Beispiel wird das Druckelement 9 bzw. die Bandführung durch eine Elastomerfeder 16 nach vorne gepresst. Natürlich kann das Druckelement 9 auch anders, z.B. pneumatisch, hydraulisch oder elektrisch betätigt werden. Somit übt das Druckelement 9 einen hohen Druck bzw. Kraft auf das Werkstück, insbesondere Blech 6, 7, aus, wenn dieser bei aktivierter Schweißzange 11 gegen das Werkstück, insbesondere Blech 6, 7, gepresst wird. Beim Schließen der Schweißzange 11 wird das Druckelement 9 durch das Aufsetzen am Werkstück, insbesondere Blech 6, 7, nach hinten gedrückt, bis die Elektrode 4, insbesondere die Elektrodenkappe 5, über das Band 1 die Blechoberflächen 17 des Werkstücks kontaktiert. Beim Öffnen der Schweißzange 11 wird das Druckelement 9 durch die Mittel 15 zur Kraftaufbringung, insbesondere die Elastomerfeder 16 oder ein anderes Antriebsmittel, nach vorne gedrückt. Wegen der bewusst hergestellten Zugspannung und der unvermeidbaren Steifigkeit des Bandes 1 wird es von der Elektrodenoberfläche, insbesondere der Elektrodenkappe 5, zwangsweise distanziert.

Das Druckelement 9 drückt also während des Schweißprozesses teilweise auf die der Schweißzone naheliegenden Blechoberfläche 17 und verhindert dadurch ein ansonsten für Punktschweißen übliches Öffnen der beiden Werkstücke, insbesondere Bleche 6, 7. Dies erfolgt bei den aus dem Stand der Technik bekannten Widerstandsschweißverfahren deshalb, da während des Schweißprozesses Wärme und ein punktueller Druck über die Elektroden 4 auf die Werkstücke, insbesondere Bleche 6, 7 eingebracht wird, die zu lokaler Ausdehnung der zu verschweißenden Werkstücke, insbesondere Bleche 6, 7, führt, wodurch punktgeschweißte Werkstücke, insbesondere Bleche 6, 7, zu einem Verzug/Verformen tendieren, d.h., dass sich die Bleche 6, 7 voneinander wegbewegen bzw. aufbiegen und somit ein Spalt zwischen den Blechen 6, 7 entsteht. Dies wird durch die spezielle Ausgestaltung des erfindungsgemäßen Punktschweißwerkzeuges 8 verhindert, da zusätzlich zur Elektrode 4 noch über das Druckelement 9 ein entsprechend hoher Druck auf die Blechoberfläche 17 des Bleches 6, 7 ausgeübt wird, wodurch ungünstige Effekte auf einfache Art und Weise vermieden werden können.

Durch die zusätzliche Krafteinwirkung des Druckelements 9 auf das Werkstück bzw. Blech 6, 7 wird also erreicht, dass das prozessbedingte Aufbiegen bzw. Wölben der Bleche 6, 7 verhindern wird, da die Elektrode 4 und das Druckelement 9 gleichzeitig einen entsprechenden Druck auf das Werkstück bzw. Blech 6, 7 ausüben. Selbstverständlich ist es möglich, dass bei entsprechender Ausbildung des Mittels 15 zur Kraftaufbringung der Druck bzw. die Kraft mit der das Druckelement 9 auf das Werkstück, insbesondere Blech 6, 7, drückt, einstellbar ist.

Das allfällige Band 1 wird während bzw. nach dem Abheben der Elektrode 4 vom Werkstück, insbesondere Blech 6, 7, zwangsweise bevorzugt mechanisch über das Mittel 15 zur Kraftaufbringung von der Punktschweißelektrode 8 abgehoben. Dadurch wird der Kraftaufwand zum Weiterbewegen des Bandes 1 vermindert und in weiterer Folge Bandabrisse vermieden. Dadurch ist die Zuverlässigkeit der Vorrichtung bzw. des Schweißprozesses gewährleistet. Dabei hat es sich als sehr vorteilhaft erwiesen, das Band 1 nach jedem Schweißpunkt von der Elektrodenoberfläche bzw. Elektrodenkappe 5 abzuheben. Damit ergeben sich mehrere Vorteile. Da das Band 1 vor dem Verschieben abgehoben wird, wird die Elektrode 4 entsprechend geschont und nicht durch das darüber gezogene Band 1 verschlissen. Die Elektrode 4 bleibt dadurch länger formbeständig und ein Ankleben des Bandes 1 an der Elektrode 4 wird auch bei mehrfachem Schweißen am gleichen Bandabschnitt verhindert. Die Zuverlässigkeit der gesamten Apparatur bzw. des Schweißprozesses wird somit sehr erhöht, da insbesondere durch die Reduzierung der Reibung bzw. durch die Verringerung der notwendigen Transportkraft Bandrisse vermieden werden. Die selbe Stelle des Bandes 1 kann daher mehrfach verwendet werden, ohne zu riskieren, dass das Band 1 an der Elektrodenoberfläche bzw. Elektrodenkappe 5 anhaftet oder damit verschweißt, wodurch erhebliche Bandmengen eingespart werden können.

Weiters ist es möglich, dass das Druckelement 9 als Sensor für die Erfassung der Berührung bzw. Kontaktierung des Punktschweißwerkzeuges 8 mit dem Werkstück, insbesondere Blech 6, 7, ausgebildet ist. In diesem Fall wird über das Druckelement 9 die Berührung mit dem Werkstück erkannt. Daraufhin können entsprechende Steuerabläufe eingeleitet werden. Dabei ist es möglich, dass das Punktschweißwerkzeug 8 mit oder ohne Band 1 eingesetzt wird.

Hierzu wird das Druckelement 9, beispielsweise mit elektrischer Energie, insbesondere mit einem Spannungspotential, beaufschlagt, während das Gegenpotential am Werkstück angelegt ist. Berührt nunmehr das Druckelement 9 die Werkstückoberfläche bzw. Blechoberfläche 17 so wird der Stromkreis geschlossen. Durch entsprechende Auswertung mit Hilfe einer Steuervorrichtung (nicht dargestellt) kann somit erkannt werden, dass eine Berührung des Druckelements 9 auf dem Werkstück stattgefunden hat. Die Steuervorrichtung kann nunmehr unterschiedliche Verfahrensabläufe einleiten.

Durch die selbstständige Erkennung der Berührung des Druckelements 9 am Werkstück ist es nunmehr möglich, den Schließvorgang der Schweißzange 11 zu optimieren. Beispielsweise kann bei Aktivierung der Schweißzange 11 zuerst ein schneller Schließvorgang ausgeführt werden, bis eine Berührung des Werkstückes zustande kommt, worauf anschließend nur mehr ein schweißdruckaufbauender Schließvorgang mit geringer Geschwindigkeit stattfindet. Dies hat den Vorteil, dass keine abrupte Krafteinwirkung auf die Werkstücke, insbesondere Bleche 6, 7, stattfindet und somit die Gefahr eines Verzuges der Bleche 6, 7 verhindert wird. Auch wird der Schließvorgang durch einen derartigen Vorgang sehr beschleunigt, da zuerst mit hoher Geschwindigkeit die Schweißzange 11 geschlossen werden kann und erst bei der Berührung ein langsamer Schließvorgang eingeleitet wird, wogegen bei dem aus den Stand der Technik bekannten System die Schweißzange 11 schon ab einer vorab programmierten Zangenposition, welche natürlich Sicherheitsabstände beinhaltet, mit einer geringen Geschwindigkeit geschlossen werden, um die abrupte Krafteinwirkung zu vermeiden. Somit wird ein optimierter Schließvorgang erreicht.

Das Druckelement 9 kann dabei isoliert an der Elektrode 4 angeordnet sein. Dadurch ist es möglich, dass ein getrennter Stromkreis vom Schweißstromkreis verwendet werden kann bzw. eine optimale Steuerung der Stromquelle, nicht dargestellt, ermöglicht wird.

Es ist aber auch eine mechanische Erkennung der Berührung bzw. Kontaktierung möglich, wobei hierzu das Druckelement 9 mit einem Schaltelement in Verbindung steht, so dass aufgrund der Verschiebung des Druckelements 9 das Schaltelement aktiviert wird und somit Steuervorgänge eingeleitet werden können bzw. durch die Aktivierung des Schaltelementes die Steuervorrichtung wiederum die Berührung der Werkstückoberfläche bzw. Blechoberfläche 17 auswerten kann.

## Patentansprüche

1. Punktschweißwerkzeug zum Widerstandsschweißen von Werkstücken, insbesondere Blechen (6, 7), mit zumindest einer Schweißzange (11) mit zumindest einer Elektrode (4) und einer Wickelvorrichtung zum Auf- und Abwickeln eines Bandes (1) zum Schutz der zumindest einen Elektrode (4), **dadurch gekennzeichnet, dass** an der Elektrode (4) im Bereich der Elektrodenkappe (5) ein Druckelement (9) angeordnet ist, welches Druckelement (9) eine Führung (10) für das Band (1) aufweist und das in Längsrichtung der Elektrode (4) beweglich mit dieser verbunden ist, so dass das Band (1) von der Elektrode (4) distanzierbar ist, und dass an der Elektrode (4) ein Stützelement (13) mit Führungskanälen (14) zur Aufnahme des Bandes (1) und zur Führung des Bandes (1) entlang der Elektrode (4) angeordnet ist.

2. Punktschweißwerkzeug nach Anspruch 1, **dadurch gekennzeichnet, dass** das Druckelement (9) im entlasteten Zustand die Elektrode (4) überragt.

3. Punktschweißwerkzeug nach Anspruch 1 oder 2, **dadurch gekennzeichnet, dass** Mittel zur Kraftaufbringung des Druckelements (9) vorgesehen sind, so dass das Druckelement (9) im Betrieb einen Druck bzw. eine Kraft auf die Werkstücke, insbesondere die Bleche (6, 7), ausübt.

4. Punktschweißwerkzeug nach Anspruch 3, **dadurch gekennzeichnet, dass** die Kraftaufbringungsmittel durch ein elastisches Element, beispielsweise eine Feder oder ein Verstellmittel (15), gebildet sind.

5. Punktschweißwerkzeug nach Anspruch 3 oder 4, **dadurch gekennzeichnet, dass** Mittel zur Einstellung der Kraft auf das Druckelement (9) vorgesehen sind.

6. Punktschweißwerkzeug nach einem der Ansprüche 1 bis 5, **dadurch gekennzeichnet, dass** die Führung (10) für das Band (1) im Druckelement (9) derart ausgebildet ist, dass das Band (1) über eine Stirnfläche (12) des Druckelements (9) ragt.

7. Punktschweißwerkzeug nach einem der Ansprüche 1 bis 6, **dadurch gekennzeichnet, dass** das Druckelement (9) in Form eines Metallringes mit geringerer elektrischer Leitfähigkeit als die Elektrode (4) ausgebildet ist.

8. Punktschweißwerkzeug nach einem der Ansprüche 1 bis 7, **dadurch gekennzeichnet, dass** das Druckelement (9) als Sensor zur Erfassung der Berührung des Punktschweißwerkzeuges (8) mit dem Werkstück, insbesondere Blech (6, 7), ausgebildet ist.

## Claims

1. A spot-welding tool for the resistance-welding of workpieces, particularly metal sheets (6, 7), including at least one welding tong (11) having at least one electrode (4) and a winding means for winding and unwinding a strip (1) for the protection of the at least one electrode (4), **characterized in that** a pressure element (9) is arranged in the region of the electrode cap (5), which pressure element (9) comprises a guide (10) for the strip (1) and is connected with the electrode (4) so as to be movable in the longitudinal direction of the same as to enable the strip (1) to be distanced from the electrode (4), and that a support element (13) including guide channels (14) for receiving the strip (1) and for guiding the strip (1) along the electrode (4) is arranged on the electrode (4).

2. A spot-welding tool according to claim 1, **characterized in that** the pressure element (9) projects beyond the electrode (4) in the relieved state.

3. A spot-welding tool according to claim 1 or 2, **characterized in that** force application means of the pressure element (9) are provided such that the pressure element (9), in operation, exerts a pressure or force on the workpieces, particularly metal sheets (6, 7).

4. A spot-welding tool according to claim 3, **characterized in that** the force application means are comprised of an elastic element, for instance a spring or an adjustment means (15).

5. A spot-welding tool according to claim 3 or 4, **characterized in that** means for adjusting the force on the pressure element (9) are provided.

6. A spot-welding tool according to any one of claims 1 to 5, **characterized in that** the guide (10) for the strip (1) within the pressure element (9) is configured such that the strip (1) projects beyond an end face (12) of the pressure element (9).

7. A spot-welding tool according to any one of claims 1 to 6, **characterized in that** the pressure element (9) is configured as a metal ring having a lower electrical conductivity than the electrode (4).

8. A spot-welding tool according to any one of claims 1 to 7, **characterized in that** the pressure element (9) is configured as a sensor for detecting the contact of the spot-welding tool (8) with the workpiece, particularly metal sheets (6, 7).

## Revendications

1. Outil de soudage par points pour le soudage par résistance de pièces, en particulier des tôles (6, 7), comportant au moins un porte-électrodes (11) avec au moins une électrode (4) et un dispositif d'enroulement pour l'enroulement et le déroulement d'une bande (1) destinée à protéger ladite au moins une électrode (4), **caractérisé en ce que** sur l'électrode (4), dans la zone du capuchon (5) de l'électrode, est disposé un élément de pression (9), lequel élément de pression (9) comporte un guidage (10) pour la bande (1) et est relié à celui-ci de manière mobile dans le sens longitudinal de l'électrode (4), de telle sorte que la bande (1) peut être amenée à distance de l'électrode (4), et **en ce que** sur l'électrode (4) est disposé un élément de support (13) avec des conduits de guidage (14) destinés à recevoir la bande (1) et destinés à guider la bande (1) le long de l'électrode (4).

2. Outil de soudage par points selon la revendication 1, **caractérisé en ce que** l'élément de pression (9), à l'état non sollicité, s'avance au-delà de l'électrode (4).

3. Outil de soudage par points selon la revendication 1 ou 2, **caractérisé en ce qu'**il est prévu des moyens d'application de force sur l'élément de pression (9), de telle sorte que l'élément de pression (9) exerce, en cours de service, une pression ou une force sur les pièces à souder, en particulier les tôles (6, 7).

4. Outil de soudage par points selon la revendication 3, **caractérisé en ce que** les moyens d'application de force sont formés par un élément élastique, tel qu'un ressort ou un moyen de réglage (15).

5. Outil de soudage par points selon la revendication 3 ou 4, **caractérisé en ce qu'**il est prévu des moyens destinés à régler la force à appliquer sur l'élément de pression (9).

6. Outil de soudage par points selon l'une quelconque des revendications 1 à 5, **caractérisé en ce que** le guidage (10) pour la bande (1) dans l'élément de pression (9) est réalisé de telle sorte que la bande (1) s'avance au-delà d'une face frontale (12) de l'élément de pression (9).

7. Outil de soudage par points selon l'une quelconque des revendications 1 à 6, **caractérisé en ce que** l'élément de pression (9) est réalisé sous la forme d'une bague métallique avec une conductibilité électrique plus faible que celle de l'électrode (4).

8. Outil de soudage par points selon l'une quelconque des revendications 1 à 7, **caractérisé en ce que** l'élément de pression (9) est réalisé sous la forme d'un capteur destiné à détecter le contact de l'outil de soudage par points (8) avec la pièce à souder, en particulier une tôle (6, 7).
